# EUROPEAN PATENT APPLICATION

(11) **EP 1 626 565 A1**
(43) Date of publication of application: **15.02.2006**
(21) Application number: 04733084.0
(22) Date of filing: 14.05.2004
(51) Int. Cl.: H04N 1/387

(54) **PRINTED DOCUMENT FALSIFICATION DETECTION DEVICE AND FALSIFICATION DETECTION METHOD**

(30) Priority: 16.05.2003 JP 2003138881
(71) Applicant: Oki Electric Industry Company, Limited, Tokyo 105-8460 (JP)
(72) Inventor: SOMEYA, Akihiro, Oki Electric Industry Co. Ltd., Minato-ku, Tokyo 105-8460 (JP)
(74) Representative: Betten & Resch
(86) International application number: PCT/JP2004/006537
(87) International publication number: WO 2004/102950

(57) **Abstract**

A printed document tampering detection apparatus 120 for detecting tampering with a printed document having embedded in the background thereof at least part of the document contents as an electronic watermark comprises a reader unit 127 that reads the printed document and generates an image of the printed document, a watermark detection unit 125 that detects document contents from the electronic watermark embedded in the printed document and an output unit 123 that brings up a first display frame 310 for the printed document image and a second display frame 320 for the document contents in such a manner that a ready comparison thereof is enabled. The user is able to visually compare the contents of document information 105 and the printed document image 126 and retrieve the initial unadulterated information. Thus, the tampering does not result in any data loss.

## Description

### BACKGROUND OF THE INVENTION

### 1. Field of the Invention

The present invention relates to an apparatus and a method to be adopted to detect tampering of a printed document having embedded in the background thereof at least part of the document contents as an electronic watermark.

### 2. Description of the Related Art

The significant progress made in information processing technology in recent years has brought on the advent of workflow systems in both the private sector and in the public sector, through which procedures are electronically executed by exchanging data on networks (see, for instance, Japanese Laid Open Patent Publication No. H 10-49598). However, certain aspects of a given job are still bound to be handled through non-electronic procedures under normal circumstances. For instance, when a balance payment is processed through such a system, pertinent electronic data are normally printed out, the hardcopy is stamped or the like and subsequent communication is carried out by exchanging information on paper. The data exchanged on paper in this matter can be tampered with through over-printing or the like and, for this reason, it is normally necessary to verify the data contents by contacting the data originator or to verify the data contents by making and storing in advance a carbon copy of the original document and checking the data contents against the carbon copy.

However, the method of the related art described above necessitates the trouble of having to verify the data contents by contacting the data originator, or requires a costly investment in a printing means capable of producing carbon copies and a storage means capable of storing the carbon printed matter in a reliable manner under conditions that prevent tampering. For this reason, it is more desirable to be able to detect any tampering with a printed document by using only the printed document (on paper).

Another problem with the method in the related art described above is that even if tampering with the printed document is detected, the user is only informed of the fact of the tampering and the document cannot easily be corrected. An electronic watermark embedded for purposes of tampering prevention can sometimes create more difficulties. Namely, a tampered printed document, having been tampered with by manipulating the embedded electronic watermark itself or replacing it with another electronic watermark, can be authenticated as an original document.

### SUMMARY OF THE INVENTION

An object of the present invention, which has been completed by addressing the problems of the printed document tampering detection method in the related art described above, is to provide a new and improved apparatus and a new and improved method for printed document tampering detection that make it possible to detect a tampered portion in a printed document reliably and easily.

Another object of the present invention is to provide a new and improved apparatus and a new and improved method for printed document tampering detection that enable correction of a tampered portion by preventing data loss due to the act of tampering with the printed document.

In order to achieve the objects described above, a first aspect of the present invention provides a tampering detection apparatus that detects tampering with a printed document having embedded in the background thereof at least part of the document contents as an electronic watermark, comprising the following components:
A printed document read unit that generates an image of the printed document by reading the printed document,
A watermark detection unit that detects the document contents from the electronic watermark embedded in the printed document, and
An output unit that outputs the image of the printed document and the document contents in conditions that facilitates comparison thereof.

Such a tampering detection apparatus enables the user to visually compare document information embedded as an electronic watermark in the printed document with a scanned image of the printed document. Since any tampering with the printed document can be visually detected in this manner, the reliability of the printed document is greatly improved. In addition, even if the printed document has been tampered with, the act of tampering does not cause data loss since the initial unadulterated information can be obtained from the embedded electronic watermark.

The tampering detection apparatus described above may be adopted in the following applications.

The output unit may compare the image of the printed document with the document contents and output the comparison results as well. It is to be noted that the apparatus may include a comparison unit that compares the image of the printed document with the document contents as a component independent of the output unit. In either case, by automatically comparing the image of the printed document with the document contents and outputting the comparison results, a portion of the document likely to have been tampered with can be clearly indicated for the convenience of the person checking the document for tampering. In addition, even if the paper surface has become dirty or smudged or if "noise" has been introduced during the printing operation or the read operation, the final judgment is made by the person through visual inspection, which improves the accuracy of the tampering detection.

More specifically, based upon the comparison results, the output unit may output the image of the printed document and the document contents by clearly indicating the document portion likely to have been tampered with either in the printed document image or in the document contents. By indicating the document portion likely to have been tampered with as described above, the accuracy of the tampering detection is improved.

While the output of the printed document image and the document contents by the output unit is a concept that includes, for instance, printing them out on paper and writing them as an electronic file into a hard disk, a removable storage medium or the like, it is particularly simple and convenient for the output unit to include a display unit so as to bring up the printed document image and the document contents on display on the screen of the display unit. In more specific terms, the screen at the display unit may include a first display frame for the printed document image and a second display frame for the document contents to display them for ready comparison.

In such a case, a GUI (graphical user interface) function can be achieved on the screen at the display unit. A GUI is an interface that enables the computer to be operated by manipulating graphical elements including icons and windows displayed on the screen with a pointing device such as a mouse. Since programs and files are indicated as graphical icons, even a novice user can learn to operate the computer intuitively and quickly.

Such a GUI function may be provided by installing a program for GUI function implementation in the tampering detection apparatus or a general-purpose computer. The program may be installed by using a computer-readable recording medium having recorded therein the program. The program that enables the GUI function implementation may be written in any programming language. In addition, the recording medium having recorded therein the program may be any of various types of recording media that are currently used or may be used in the future for purposes of program recording, including CD ROMs, DVD-ROMs and flexible disks.

With the GUI function, a scroll display of a portion of the document contents corresponding to a specific portion of the printed document selected in the printed document image display in the first display frame may be brought up in the second display frame (at the beginning of the second display frame, for instance), or a scroll display of a portion of the printed document image corresponding to a specific portion of the document image contents selected in the second display frame may be brought up in the first display frame (at the beginning of the first display frame, for instance). The "specific portion" in this context specifically refers to a portion judged by the person checking for tampering to be likely to have been tampered with. In such a scroll display, the checker is able to quickly judge whether or not the document has been tampered with. In addition, the document portions preceding and following the portion likely to have been tampered with can be readily checked through scrolling.

The electronic watermark may contain information related to an electronic signature of the document originator. In this case, tampering with the electronic watermark itself can be detected, since the electronic signature makes it possible to authenticate the document as a document having been prepared by the true originator.

Alternatively, the electronic watermark may be generated by encrypting at least part of the document contents. Even if the electronic watermarking method is leaked to an outsider, the contents of the electronic watermark itself cannot be tampered with as long as the encryption method remains secure and thus, tampering with the document by a third-party can be prevented.

In order to achieve the objects described above, a second aspect of the present invention provides a tampering detection method for detecting tampering with a printed document having embedded in the background thereof at least part of the document contents as an electronic watermark, comprising the following steps.
A printed document read step in which the printed document is read and an image of the printed document is generated,
A watermark detection step in which the document contents are detected from the electronic watermark embedded in the printed document,
An output step in which the image of the printed document and the document contents are output in conditions that facilitate comparison thereof.

Such a tampering detection method enables the user to visually compare document information embedded as an electronic watermark in the printed document with a scanned image of the printed document. Since any tampering with the printed document can be visually detected in this manner, the reliability of the printed document is greatly improved. In addition, even if the printed document has been tampered with, the act of tampering does not cause data loss since the initial unadulterated information can be obtained from the embedded electronic watermark.

The method may further comprise a comparison step in which the printed document image and the document contents are compared with each other, and the results of the comparison executed in the comparison step may also be output during the output step. Through this method, by automatically comparing the image of the printed document with the document contents and outputting the comparison results, a portion of the document likely to have been tampered with can be clearly indicated for the convenience of the person checking the document for tampering.

### BRIEF DESCRIPTION OF THE DRAWINGS

FIG. 1 shows the structure adopted in the printed document tampering detection system achieved in a first embodiment;
FIG. 2 illustrates the data structure of a document 103, with FIG. 2(a) showing a resident registration card representing an example of the document 103, FIG. 2(b) showing critical fields and FIG. 2(c) showing document information 105 extracted from the document 103;
FIG. 3 shows an image 107 of the printed document having embedded therein an electronic watermark;
FIG. 4 shows the screen display brought up by the output unit in the first embodiment;
FIG. 5 illustrates how the structure shown in FIG. 1 may be achieved in conjunction with computers;
FIG. 6 shows the structure adopted in the printed document tampering detection system achieved in a second embodiment;
FIG. 7 shows the screen display brought up by the output unit in a third embodiment; and
FIG. 8 shows the screen display brought up by the output unit in a fourth embodiment.

### DETAILED DESCRIPTION OF THE PREFERRED EMBODIMENTS

The following is a detailed explanation of the preferred embodiments of the tampering detection apparatus and the tampering detection method according to the present invention, to be adopted to detect tampering on a printed document. It is to be noted that in the specification and the drawings, the same reference numerals are assigned to components having substantially identical functions and structural features to preclude the necessity for a repeated explanation thereof.

### (First Embodiment)

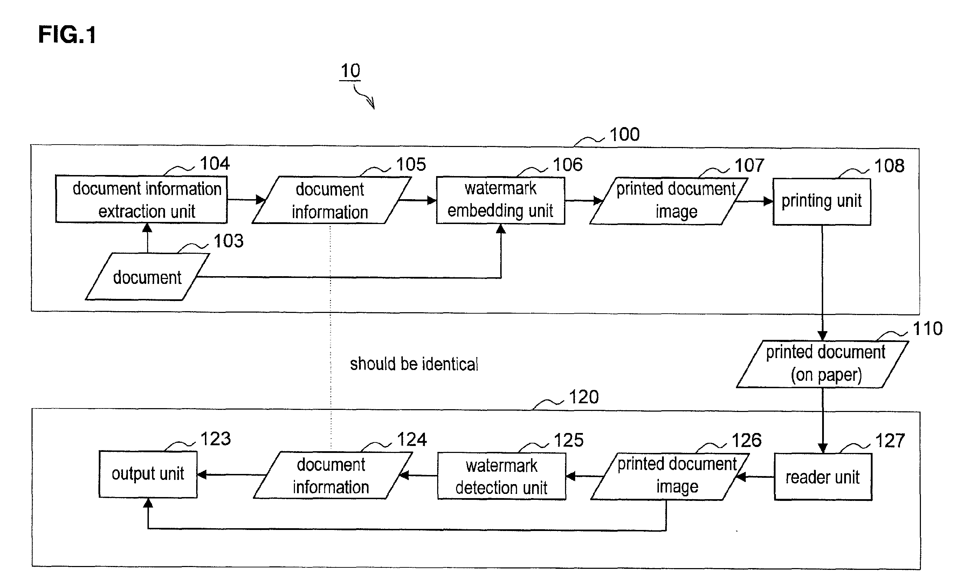

FIG. 1 shows the structure adopted in a printed document tampering detection system (hereafter simply referred to as a tampering detection system) 10 achieved in the embodiment. As shown in FIG. 1, the tampering detection system 10 is primarily constituted with a watermark embedding apparatus 100 and a tampering detection apparatus 120, between which a printed document 110 to undergo tampering detection is exchanged.

First, the watermark embedding apparatus 100 is explained.

### (Watermark Embedding Apparatus 100)

As shown in FIG. 1, the watermark embedding apparatus 100 comprises a document information extraction unit 104 that extracts document information (information that includes the document contents of a document 103) with regard to the document 103, a watermark embedding unit 106 that embeds the document information 105 in the document 103 as an electronic watermark and a printing unit 108 that prints out a document image 107. The document printed out by the printing unit 108 (printed document) is then provided to the tampering detection apparatus 120.

The following is an explanation of the various elements in the watermark embedding apparatus 100.

### (Document 103)

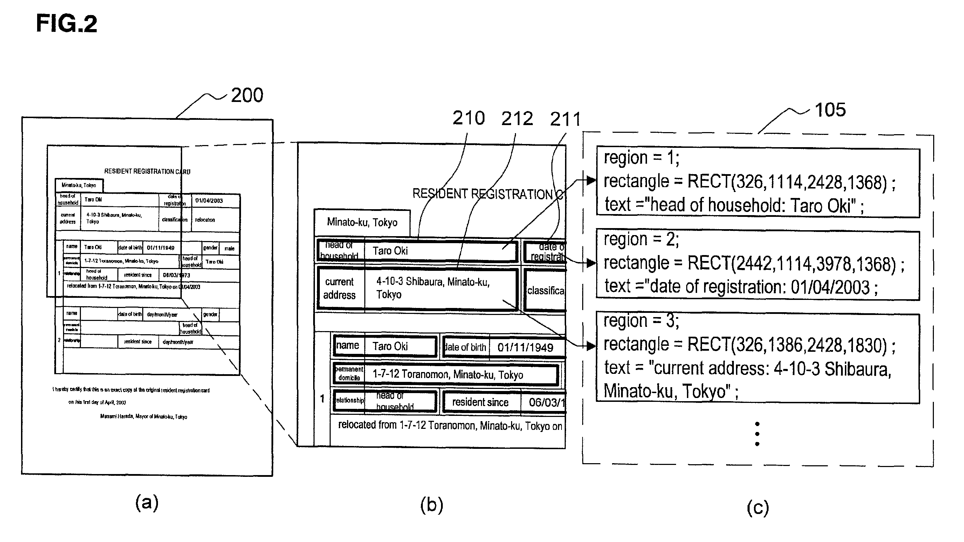

FIG. 2 shows the data structure of the document 103.

It is assumed that the document 103 is a preformatted document with predefined information entry fields. The document 103 may be created with a document preparation software program (such as a document editor software program installed in a computer) or it may be created in hardware (such as a typewriter or a word processor having a printout function only). It is to be noted that the specific method with which the document 103 is prepared, i.e., with software or hardware, determines whether or not electronic data related to the document contents or the like of the document 103 can be obtained and thus affects part of the subsequent processing. This point is to be described in detail later. Now, an explanation is given in reference to the embodiment on an example in which the document is the Resident registration card shown in FIG. 2(a).

The designer of the original format (with specific information yet to be entered) of the document 103 assigns in advance fields in which critical information are to be entered (hereafter referred to as critical fields) as tampering prevention portions. In the case of the resident registration card in FIG. 2(a), such tampering prevention portions may include a field 210 where the name of the head of the household is entered, a field 211 where the date of registration is entered and a field 212 where the current address is entered, enclosed in bold frames as in FIG. 2(b).

### (Document Information Extraction Unit 104)

In correspondence to each critical field in the document 103, the document information extraction unit 104 extracts the document contents entered in the critical fields and other additional information. When the fields 210, 211, 212 and the like have been designated as critical fields, as described above, for instance, the document information extraction unit 104 extracts document contents by extracting information indicating the head of the household, the date of registration and the current address respectively from the fields 210, 211 and 212 as text data. The additional information includes, for instance, information indicating the number assigned to each critical field (e.g., one of the numbers assigned in sequence, starting at the upper left position on the page) and the position of the critical field (e.g., data indicating the coordinates on the page).

If the document 103 has been created with a software program as described earlier, the document information extraction unit 104 is able to extract such document contents as text data on the computer having been used to create the document 103. If, on the other hand, the document 103 has been prepared on hardware or the like, the document information may be extracted by reading a printout of the document 103 with an optical character reading means (optical character reader: OCR).

### (Document Information 105)

The document information 105 in FIG. 2(c) includes all the information having been extracted by the document information extraction unit 104. The contents of the document information 105 in FIG. 2(c) related to, for instance, the head of the household, include "region" indicating the number assigned to the critical field (one of the numbers assigned in sequence starting at the upper left position on the page), "rectangle" indicating the position of the critical field (data indicating the coordinates on the page) and "text" indicating the contents of the entered information.

### (Watermark Embedding Unit 106)

The watermark-embedding unit 106 embeds the document information 105 in the document 103 as an electronic watermark. Electronic watermarking technologies through which information is embedded in documents include, for instance, that disclosed in reference literature (Japanese Laid Open Patent Publication No. 2003-101762 "Watermark Information Embedding Apparatus and Watermark Information Detection Apparatus"). The watermark image embedding apparatus disclosed in this publication embeds sensitive information in a document by preparing a plurality of dot patterns with varying wave directions and/or varying wave lengths achieved through different dot arrangements, assigning a single symbol to a given dot pattern and setting the dot patterns in various combinations. The sensitive information is first encrypted before it is embedded as an electronic watermark. The electronic watermarking technology disclosed in this reference literature may be adopted in the embodiment. There is an advantage to embedding the document information 105 in the document 103 as an electronic watermark in that the presence of the document information 105 is not likely to be discerned readily by a third-party.

### (Printed Document Image 107)

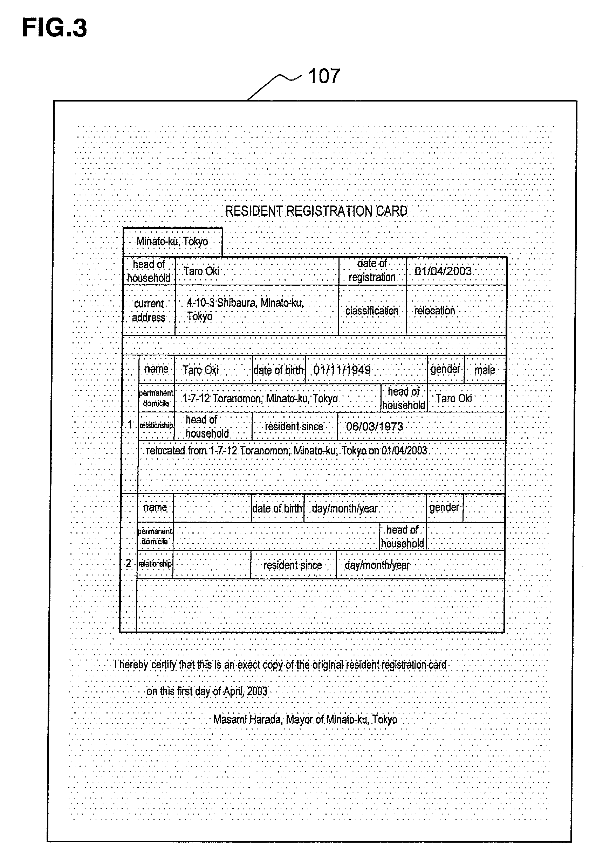

The watermark-embedding unit 106 generates the printed document image 107 in FIG. 3 by embedding the document information 105 in embedded in the document 103 as an electronic watermark.

### (Printing Unit 108)

The printing unit 108, which prints out the printed document image 107, may be constituted with, for instance, a printer device.

The watermark embedding apparatus 100 is constituted with the elements described above.

A transfer means is disposed between the watermark embedding apparatus 100 and the tampering detection apparatus 120 to enable exchange of the printed document 110.

The tampering detection apparatus 120 is now explained in reference to FIG. 1.

### (Tampering Detection Apparatus 120)

As shown in FIG. 1, the tampering detection apparatus 120 comprises a reader unit 127 that reads the printed document 110 and generates an image of the printed document 110, a watermark detection unit 125 that detects document information 124 from the electronic watermark embedded in the printed document 110 and an output unit 123 that outputs the image 126 of the printed document and the document information 124 in conditions which enable comparison thereof.

The following is an explanation of various elements constituting the tampering detection apparatus 120.

### (Reader Unit 127)

The reader unit 127, which reads the printed document 110 and generates an image of the printed document 110, may be, for instance, a scanner device.

### (Printed Document Image 126)

The printed document image 126 is generated by the reader unit 127. It is essential that the printed document image 126 generated in the embodiment be substantially identical to the printed document image 107 (see FIG. 3) obtained in the watermark embedding apparatus 100.

### (Watermark Detection Unit 125)

The watermark detection unit 125 detects the document information 124 from the electronic watermark in the printed document image 126. The electronic watermark may be detected by adopting a technology corresponding to the electronic watermark embedding technology. For instance, if the electronic watermark is embedded by adopting the technology disclosed in the reference literature (Japanese Laid Open Patent Publication No. 2003 -101762 "Watermark Information Embedding Apparatus and Watermark Information Detection Apparatus"), the electronic watermark detection technology disclosed in the same reference literature may be adopted.

### (Document Information 124)

The document information 124 is detected by the watermark detection unit 125. It is essential that the document information 124 in the embodiment be substantially identical to the document information 105 obtained in the watermark embedding apparatus 100 described above.

### (Output Unit 123)

The output unit 123 outputs the printed document image 126 and the document information 124 in such a manner that ready comparison thereof is enabled. The term "output" in this context includes a display of the printed document image and the document information on screen, a printout of them on paper and writing them as an electronic file into a hard disk, a removable storage medium or the like. The output unit 123 in the embodiment includes a display unit at which the printed document image 126 and the document information 124 are displayed on screen. In the following explanation, the display unit included as part of the output unit 123 is simply referred to as the output unit 123.

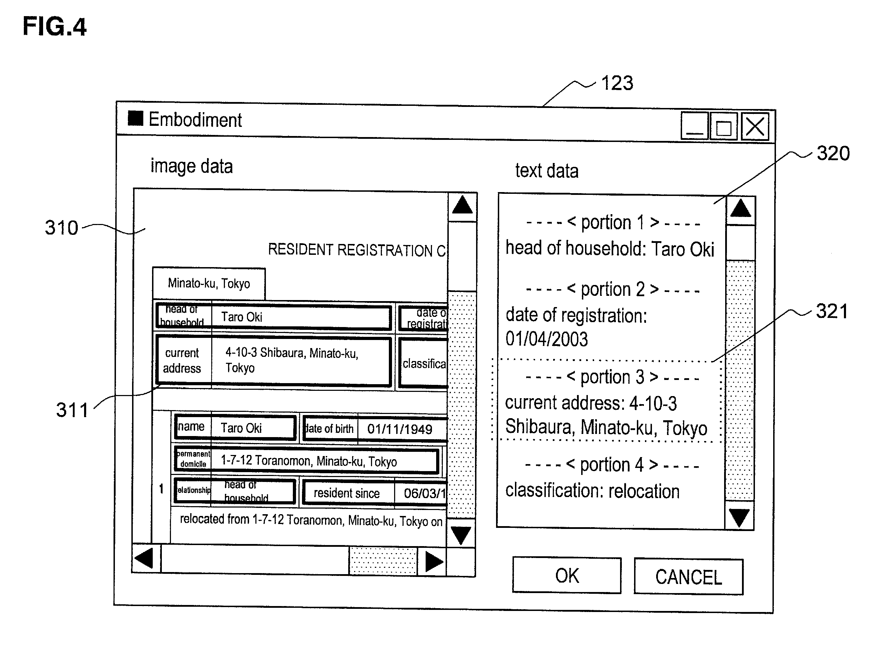

FIG. 4 shows a screen display output at the output unit 123 in the embodiment.

The output unit 123 displays the printed document image 126 and the document information 124 in a manner that enables ready comparison thereof by displaying a first display frame 310 for the printed document image 126 and a second display frame 320 for the document information 124 side by side. The output unit 123 displays the image data of the printed document image 126 in the first display frame 310 and text data of the document contents of the document 103 included in the document information 124, in the second display frame.

In the first display frame 310, each critical field designated as a tampering prevention portion is enclosed in a bold frame 311. In the second display frame 320, the document contents in the document 103 are laid out based upon the additional information having been extracted from the document 103 and embedded as the electronic watermark. Namely, a portion 321 corresponding to the current address, for instance, is indicated as "(portion 3)" based upon the information related to the number assigned to the critical field and provided as the additional information on the document 103 (e.g., one of the numbers assigned in sequence starting at the upper left position on the page) and the document contents are thus sorted and displayed based upon the information indicating the numbers assigned to the individual critical fields.

The person checking the printed document 110 for tampering, more specifically, the person who entered the data in the document 103 or an individual having received the document 103 from the person who entered the data therein, is able to check for any tampering reliably and easily simply by visually inspecting the screen display at the output unit 123.

The tampering detection system 10 achieved in the embodiment operates as described above.

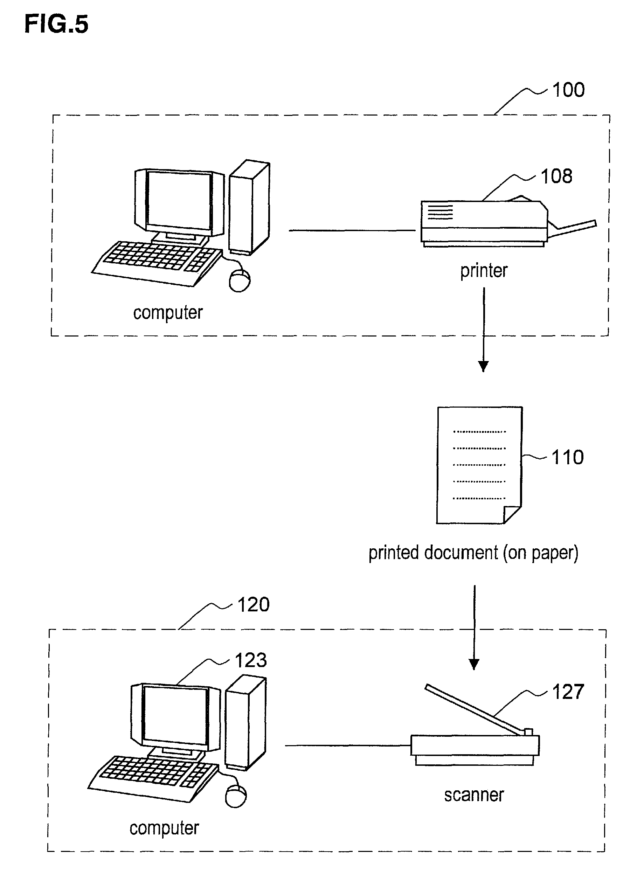

FIG. 5 illustrates the tampering detection system 10 constituted with computers, a printer and a scanner. In this example, a computer and the printer together constitute the watermark embedding apparatus 100, and in particular, the printer constitutes the printing unit 108. In addition, a computer and the scanner together constitute the tampering detection apparatus 120 and in particular, the scanner constitutes the reader unit 127, with the monitor in the computer constituting the output unit 123. It is to be noted that a single computer may instead be used to constitute both the watermark embedding apparatus and the tampering detection apparatus. In other words, the printer and the scanner may both be connected to a single computer.

As explained above, the document information 105 is embedded in the printed document as an electronic watermark to enable the user to visually compare the contents of the document information 105 with the printed document image 126. Since any tampering with the printed document 110 can be visually detected, the reliability of the printed document 110 greatly improves. In addition, even if the printed document 110 has been tampered with, the unadulterated information can be obtained from the embedded electronic watermark and thus, the tampering does not cause any data loss.

### (Second Embodiment)

In reference to the second embodiment, a printed document tampering detection method through which tampering with watermark information can be detected based upon an electronic signature created by adopting a public key encryption system and a public key infrastructure: (PKI).

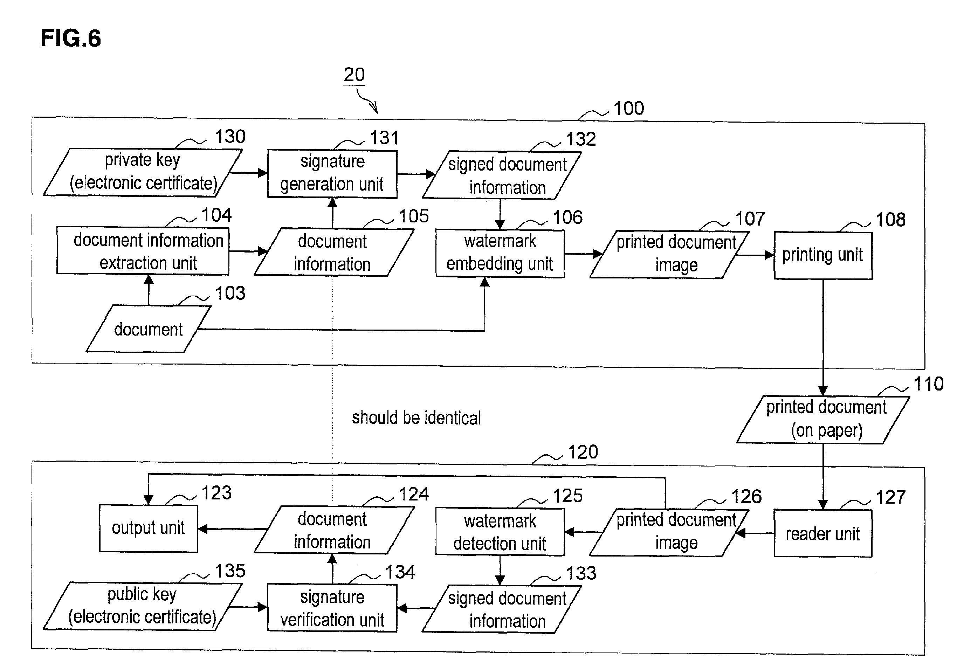

FIG. 6 shows the structure adopted in a printed document tampering detection system (hereafter simply referred to as a tampering detection system) 20 achieved in the embodiment. As shown in FIG. 6, the tampering detection system 20 is primarily constituted with a watermark embedding apparatus 100 and a tampering detection apparatus 120, between which a printed document 110 to undergo tampering detection is exchanged.

First, the watermark embedding apparatus 100 is explained.

### (Watermark Embedding Apparatus 100)

As shown in FIG. 1, the watermark embedding apparatus 100 comprises a document information extraction unit 104 that extracts document information (information that includes the document contents of a document 103) with regard to the document 103, a signature generation unit 131 that generates a signature based upon a private key 130, a watermark embedding unit 106 that embeds signed document information 132 in the document 103 as an electronic watermark and a printing unit 108 that prints out a printed document image 107. The document printed out by the printing unit 108 (printed document) is then provided to the tampering detection apparatus 120.

Since the document 103, the document information extraction unit 104, the document information 105, the printed document image 107 and the printing unit 108 among the elements mentioned above are substantially identical to those in the first embodiment, a repeated explanation thereof is omitted and the explanation focuses on features that distinguish the second embodiment from the first embodiment.

### (Private Key 130)

The private key 130 used in the public key encryption system belongs to the signatory alone. It is to be noted that the term "signature" used in the explanation of the embodiment refers to a so-called electronic signature (digital signature) used to authenticate the document 103 as a document having been prepared by the signatory. Since only the signatory is able to sign the encrypted document by using the private key 130, such a signature is an effective means for identification.

It is to be noted that information related to an electronic certificate used to identify a public key to be used to decode the signature having been encrypted with the private key 130 may also be embedded in the document 103. Such information related to the electronic certificate used to obtain a public key 135 for the tampering detection to be detailed later and it may be information related to the Certificate Authority (CA) which is a third party organization or it may be identification information for the electronic certificate issued by the Certificate Authority. It is to be noted that the electronic certificate (including the private key 130) itself may be embedded in the document 103 instead of the information related to the electronic certificate.

### (Signature Generation Unit 131)

The signature generation unit 131 generates a signature based upon the private key 130. More specifically, it generates a signature by calculating the hash value for the image data of the document 103 and encrypting the document using the private key 130.

### (Signed Document Information 132)

The signed document information 132 includes the signature generated by the signature generation unit 131 added to the entire information (document information) extracted by the document information extraction unit 104.

### (Electronic Watermark Embedding Unit 106)

The electronic watermark-embedding unit 106 embeds the signed document information 132 in the document 103 as an electronic watermark. The information may be embedded in documents by adopting, for instance, the electronic watermarking technology disclosed in reference literature (Japanese Laid Open Patent Publication No. 2003-101762 "Watermark Information Embedding Apparatus and Watermark Information Detection Apparatus"), as in the first embodiment explained earlier.

The watermark embedding apparatus 100 is structured as described above.

A transfer means is disposed between the watermark embedding apparatus 100 and the tampering detection apparatus 120 to enable exchange of the printed document 110.

Next, the tampering detection apparatus 120 is explained.

### (Tampering Detection Apparatus 120)

As shown in FIG. 6, the tampering detection apparatus 120 comprises a reader unit 127 that generates an image of the printed document 110 by reading the printed document 110, a watermark detection unit 125 that detects signed document information 133 from the electronic watermark embedded in the printed document 110, a signature verification unit 134 that detects document information 124 by verifying the signature based upon the public key 135 and an output unit 123 that outputs the image 126 of the printed document and the document information 124 in such manner that ready comparison thereof is enabled.

Since the reader unit 127, the printed document image 126, the document information 124 and the output unit 123 among the elements mentioned above are substantially identical to those in the first embodiment, a repeated explanation thereof is omitted and the explanation focuses on features that distinguish the second embodiment from the first embodiment.

### (Watermark Detection Unit 125)

The watermark detection unit 125 detects the signed document information 133 from the electronic watermark in the printed document image 126. The electronic watermark may be detected by adopting a technology corresponding to the electronic watermark embedding technology. For instance, if the electronic watermark is embedded by adopting the technology disclosed in the reference literature (Japanese Laid Open Patent Publication No. 2003 -101762 "Watermark Information Embedding Apparatus and Watermark Information Detection Apparatus"), the electronic watermark detection technology disclosed in the same reference literature may be adopted.

### (Signed Document Information 133)

The signed document information 133 is detected by the watermark detection unit 125. It is essential that the document information 124 in the embodiment be substantially identical to the signed document information 132 obtained in the watermark embedding apparatus 100 described above.

### (Public Key 135)

In the public key encryption system, the public key 135 and the private key 130 mentioned earlier are used as a pair. A key authenticated as a valid key by the Certificate Authority (CA), which is a third party organization, is used for the public key 135. The public key 135 can be obtained for tampering detection from the Certificate Authority based upon the information related to the public key (electronic certificate) described above. If the public key has been embedded in the document 103 by the watermark embedding apparatus 100, the public key 135 can be directly obtained from the printed document image 126, instead.

### (Signature Verification Unit 134)

The signature verification unit 134 uses the public key 135 when it verifies the signature in the signed document information 133 that has been detected by the watermark detection unit 125. Thus, the document information 124 is provided to the output unit 123 located at a subsequent stage only after the document information 124 has been verified to bear contents signed by the originator. The contents of the document information 124 and the details of the output (screen display) by the output unit 123 are substantially identical to those explained in reference to the first embodiment.

### (Advantage of the Second Embodiment)

As explained above, in this embodiment the document information 124 can be verified as information having been generated by the valid originator based upon the electronic signature created by adopting the public key encryption system and the public key infrastructure: (PKI) and attached to the document information in this embodiment. As a result, any tampering with the electronic watermark itself can be detected with ease.

### (Third Embodiment)

The third embodiment is characterized by the output method adopted in the output unit 123.

The following explanation focuses on features that differentiate the third embodiment from the first and second embodiments.

The output unit 123 in the embodiment has a function of comparing in advance the printed document image 126 with the contents of the document information 124 and outputting the results of the comparison together with the printed document image and the document information. In other words, it automatically makes decisions in the process of tampering detection. It is to be noted that tampering detection may be executed by adopting the technology disclosed in reference literature (Japanese Laid Open Patent Publication No. 2003-101762 "Watermark Information Embedding Apparatus and Watermark Information Detection Apparatus"), as in the first embodiment explained earlier. In addition, the apparatus may include a separate comparison unit independent of the output unit 123 for comparing the printed document image 126 with the contents of the document information 124.

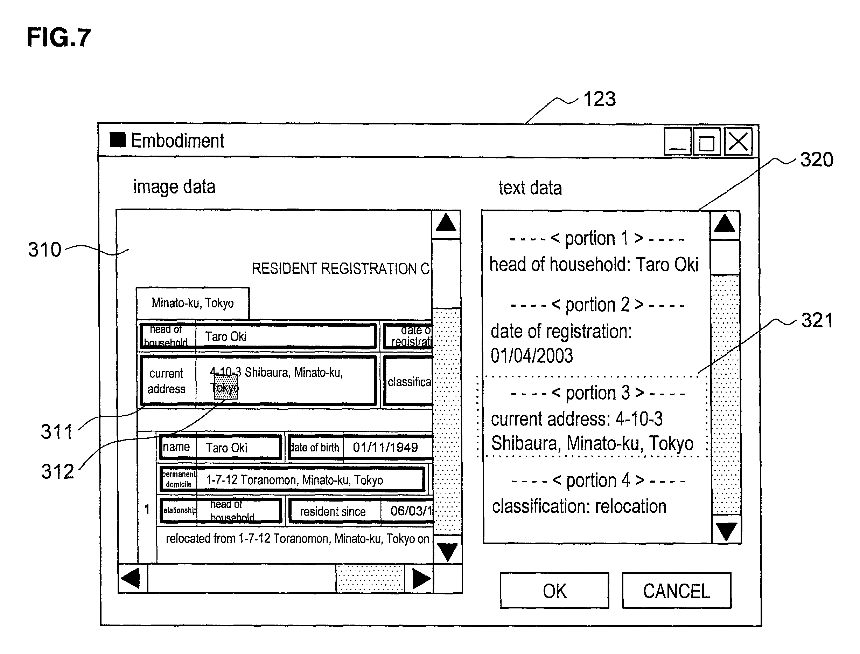

FIG. 7 shows the output screen brought up on display by the output unit 123 in the embodiment.

The output unit 123 in the embodiment is characterized in that based upon the results of the comparison of the printed document image 126 and the contents of the document information 124, a portion likely to have been tampered with is clearly indicated in the output printed document image 126. In the example presented in FIG. 7, a shaded mark 312 is attached to the portion likely to have been tampered with. The user having learned in the first display frame 310 that the critical field 312 with the shaded mark 312 attached thereto contains a portion likely to have been tampered with is then able to check specific document contents 321 in the corresponding "(portion 3)" in the second display frame 320. As a result, the risk of overlooking a tampered portion is reduced and the length of time required to judge whether or not data have been tampered with can be reduced as well.

It is to be noted that while a portion likely to have been tampered with is clearly indicated in the printed document image 126 in the output, as shown in FIG. 7 in the embodiment, the present invention is not limited to this example, and the portion likely to have been tampered with may instead be indicated in the contents (text data) of the document information 124, instead.

The portion likely to have been tampered with may be indicated by altering the display color or flashing the image portion instead of by using the shaded mark 312 as shown in FIG. 7. Alternatively, the portion likely to have been tampered with may be displayed in another display frame (a warning window).

### (Advantage of the Third Embodiment)

The factors that determine the tampering detection accuracy include the rate of detection failure, i.e., a failure in detecting tampering, and the rate of erroneous detection, i.e., erroneous detection of dirt or the like as tampering, and these two factors are normally in a trade-off relation to each other. In the embodiment, the automatic judgment is executed so as to minimize the detection failure and any erroneous detection that may occur as a trade-off is visually checked and thus, the overall detection accuracy is improved.

### (Fourth Embodiment)

The fourth embodiment is characterized by the screen control at an output unit 123 identical to that explained in reference to the third embodiment. The following explanation focuses on features that distinguish the fourth embodiment from the third embodiment.

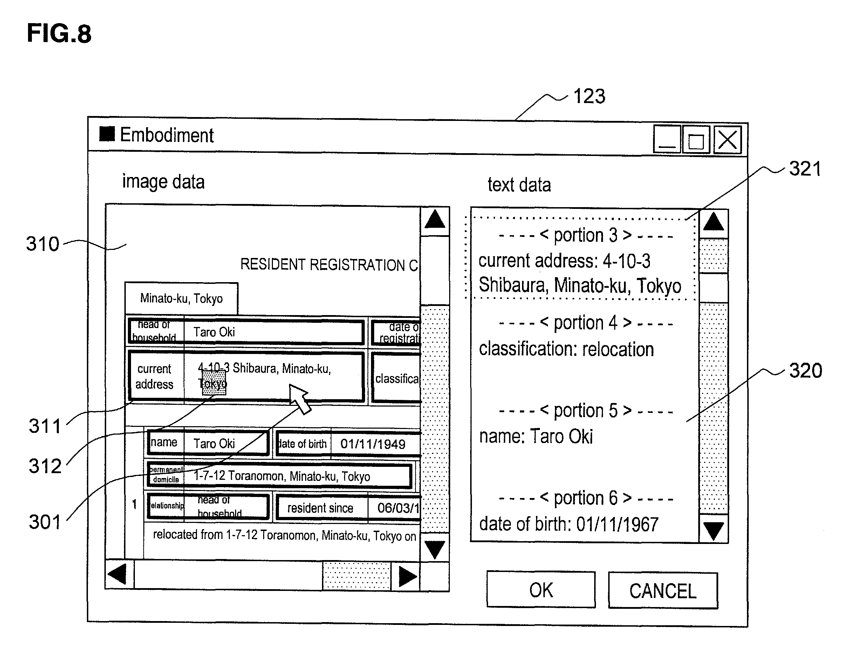

FIG. 8 shows the screen display output at the output unit 123 in the embodiment.

As shown in FIG. 7, the critical field 311 for the current address is displayed in the first display frame 310 and the document contents 321 that should rightfully be entered in the field are displayed in the second display frame in the third embodiment. However, since the data are simply provided in sequence in the second display frame, the correspondence between the critical field 311 and the data in the second display frame may not be ascertained readily.

Accordingly, as the portion enclosed by a bold frame indicating a specific critical field is clicked in the first display frame 310, the second display frame 320 is scrolled to the data portion corresponding to the clicked area so as to facilitate human scrutiny in the embodiment. More specifically, the shaded mark 312 indicating that tampering is likely to have occurred is displayed at the critical field 311 for the current address, as shown in FIG. 8. As a mouse cursor 301 is moved onto the critical field 311 for the current address and is clicked, the second display frame 320 is scrolled to display the portion 321 related to the current address at the top. As a result, the document contents that should be rightfully entered in the critical field 311 for the current address can be verified with ease.

It is not strictly necessary to click the mouse to select a critical field in the first display frame 310. For instance, the mouse, sir 301 may simply be moved over a specific field to scroll the second display frame 320 to the corresponding portion.

Alternatively, a specific portion in the second display frame 320 may be selected to scroll the first display frame to the corresponding field.

### (Advantage of the Fourth Embodiment)

As explained above, as a data portion determined to have been tampered with is selected, the other display frame is scrolled to display the corresponding data at the top, enabling an immediate comparison with the correct data in the embodiment. In addition, since the data are displayed for comparison through scrolling instead of switching, the information preceding and following the displayed data portion can be checked readily.

While the invention has been particularly shown and described with respect to preferred embodiments of the printed document tampering detection apparatus and the printed document tampering detection method according to the present invention by referring to the attached drawings, the present invention is not limited to these examples and it will be understood by those skilled in the art that various changes in form and detail may be made therein without departing from the spirit, scope and teaching of the invention.

For instance, while the electronic watermarking technology disclosed in reference literature (Japanese Laid Open Patent Publication No. 2003-101762 "Watermark Information Embedding Apparatus and Watermark Information Detection Apparatus") is adopted in the embodiments to embed information in a document, the present invention is not limited to this example and another electronic watermarking technology may be adopted in conjunction with the present invention. Alternatively, document information may be embedded in the document by utilizing a means for retrieving information such as two-dimensional bar codes or glyph codes, through computer processing.

In addition, while an explanation is given above in reference to the embodiments on an example in which the document 103 is a preformatted resident registration card, the present invention is not limited to this example and may be adopted in combination with an unformatted document.

While an explanation is given above in reference to the second embodiment on an example in which a signature is attached to the document 103, a timestamp may be further appended to the document by a third-party. A timestamp indicates that the Certificate Authority, i.e., a third-party organization, has certified the date/time of the creation of the document and its contents. Such a timestamp appended to the document makes it possible to detect tampering by the document originator himself, as well.

As described above, the present invention enables the user to visually compare document information embedded in a printed document as an electronic watermark with a scanned image of the printed document. As a result, any tampering with the printed document can be visually detected and the reliability of the printed document greatly improves. Furthermore, even if the printed document has been tampered with, the initial unadulterated information can be retrieved from the embedded electronic watermark and thus, the tampering does not result in loss of data.

In addition, by automatically comparing the printed document image with the document contents and outputting the results of the comparison, any document portion likely to have been tampered with can be clearly indicated for the party checking the document for tampering. Moreover, even if the paper surface has become dirty or if noise has been introduced during the printing operation or the read operation, the final judgment is made through visual inspection and thus, the tampering detection accuracy is improved.

The present invention may be adopted in an apparatus and a method to be adopted to detect tampering with a printed document having embedded in the background thereof at least part of the document contents as an electronic watermark.

## Claims

1. A printed document tampering detection apparatus that detects tampering with a printed document having embedded in the background thereof at least part of document contents as an electronic watermark, comprising:
a printed document read unit that generates an image of the printed document by reading the printed document;
a watermark detection unit that detects the document contents from the electronic watermark embedded in the printed document; and
an output unit that outputs the image of the printed document and the document contents in conditions which enable comparison thereof.

2. A printed document tampering detection apparatus according to claim 1, wherein:
the output unit compares the image of the printed document with the document contents and outputs comparison results together with the image and the document contents.

3. A printed document tampering detection apparatus according to claim 2, wherein:
the output unit outputs the image of the printed document and the document contents by clearly indicating a portion likely to have been tampered with in the image of the printed document.

4. A printed document tampering detection apparatus according to claim 2, wherein:
the output unit outputs the image of the printed document and the document contents by clearly indicating a portion likely to have been tampered with in the document contents.

5. A printed document tampering detection apparatus according to claim 1, wherein:
the output unit includes a display unit at which a first display frame for the image of the printed document and a second display frame for the document contents are displayed in conditions that enable ready comparison between the first display frame and the second display frame.

6. A printed document tampering detection apparatus according to claim 5, wherein:
as a specific portion of the image of the printed document is selected in the first display frame, the second display frame is scrolled to display a portion of the document contents corresponding to the specific portion.

7. A printed document tampering detection apparatus according to claim 5, wherein:
as a specific portion of the document contents is selected in the second display frame, the first display frame is scrolled to display a portion of the image of the printed document corresponding to the specific portion.

8. A printed document tampering detection apparatus according to claim 1, wherein:
the electronic watermark contains information related to an electronic signature.

9. A printed document tampering detection apparatus according to claim 1, wherein:
the electronic watermark is generated by encrypting at least part of the document contents.

10. A printed document tampering detection method for detecting tampering with a printed document having embedded in the background thereof at least part of document contents as an electronic watermark, comprising:
a printed document read step in which the printed document is read and an image of the printed document is generated;
a watermark detection step in which the document contents are detected from the electronic watermark embedded in the printed document; and
an output step in which the image of the printed document and the document contents are output in conditions that enable comparison between them.

11. A printed document tampering detection method according to claim 10, further comprising:
a comparison step in which the image of the printed document and the document contents are compared with each other, wherein:
comparison results obtained through the comparison step are also output during the output step.
